# EUROPEAN PATENT SPECIFICATION

(11) **EP 0 334 457 B1**
(45) Date of publication and mention of the grant of the patent: **15.06.1994**
(21) Application number: 89200731.1
(22) Date of filing: 21.03.1989
(51) Int. Cl.: G11B 33/04, G11B 23/02

(54) **Storage device more particular for compact discs**
Lagervorrichtung, insbesondere für Compact Discs
Dispositif de stockage, notamment pour disques compacts

(30) Priority: 22.03.1988 NL 8800712
(43) Date of publication of application: 27.09.1989
(73) Proprietor: Deja-Accessoires GmbH, D-51427 Bergisch Gladbach (DE)
(72) Inventor: Meuwese, Robertus Antonius, NL-5081 PX Hilvarenbeek (NL); Van der Sanden, Adrianus Cornelis J., NL-5025 VS Tilburg (NL)
(74) Representative: Langmaack, Jürgen, Dipl.-Ing.

(56) References cited:
- EP-A- 0 155 258
- DE-C- 715 042
- FR-A- 2 605 202
- GB-A- 2 151 552
- US-A- 2 868 606
- US-A- 2 968 398
- US-A- 3 200 983
- US-A- 3 680 177
- US-A- 3 784 269
- US-A- 3 938 871
- US-A- 4 084 865

## Description

The invention relates to a storage device according to the preamble of claim 1.

Such an assembly is known from EP-A1-0 155 258. In the device shown therein the strip means are placed opposite to each other and connected to a bottom part. Before or after assembly an elongated member, such as a rod, is introduced in bores arranged in both strip means. According to a first embodiment the elongated rod has ends tapering in diameter such that the rod is defined between both strip means. According to a further embodiment hollow rivets are used to secure the elongated member. The storage device so assembled has the drawback that after putting together the various parts it is hardly possible or cumbersome to change the spacing between two successive elongated members. This means that if it is decided to store in the same storage means articles with different thickness, this has to be determined in advance. Afterwards changing of the distance between adjacent elongated members is not possible. If the device is for instance used for sound carriers, such as compact discs, this is a drawback from the stand of view of ever changing repertoire offered.

The invention aims to provide an assembly as indicated above in which the problems indicated above are obviated.

According to the invention this is realized with the characterizing features of claim 1. With this structure it is possible also after assembly of the storage means to remove and to reintroduce elongated members as abutment means. Now it is possible to change afterwards the spacing between adjacent elongated members.

As it has shown sometimes to be difficult to remove an elongated member extending from one strip means to the opposite strip means; according to a further preferred embodiment the elongated member comprises a stud. This stud only projects partially in the assembled storage device. Because of this only at one side the elongated member together with the supporting plate has to be removed, introduced respectively in the corresponding receiving member.

According to another preferred embodiment the elongated member comprises a rod being at both ends provided with the supporting plate. Althought it is more difficult to remove and to reintroduce the elongated member according to this embodiment, less parts are necessary for obtaining the storage means according to the subject invention. Preferably said strip means are provided with receiving means at both sides of said upstanding portion. This embodiment can be used to extend elongate members from both of its sides. Because of this when placing a number of strip means parallel to each other several storage devices according to the invention can be provided. To further adapt the distance between two adjacent elongated members, at least one elongated member has a non-symmetric cross section and its supporting plate is shaped such that it can be introducted in said receiving means in at least two positions.

To connect the strip means with some kind of bottom plate, its base portion is according to a further preferred embodiment provided with securing means. It is also possible to incorporate the base portion of two strip means as described above in a bottom part, such that a storage device is realized.

The invention will now be described with reference to the drawing in which preferred embodiments are shown, which has to be understood as example only and wherein:
Fig. 1 shows a plan view of the storage device according to the invention,
Fig. 2 shows a cross sectional view according to line II-II of Fig. 1,
Fig. 3 shows a diagrammetic view of the abutment means according to the invention,
Fig. 4 shows a part of a further embodiment according to the invention,
Fig. 5 shows a detail of Fig. 4 according to arrow V from Fig. 4 and
Fig. 6 shows a side view of a abutment means according to a further embodiment of the invention.

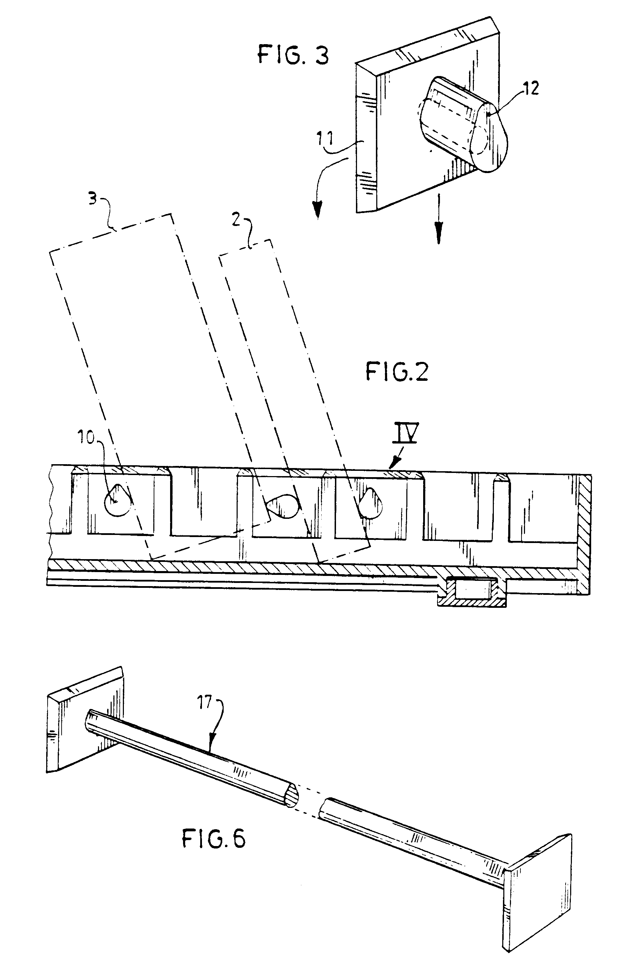

As example the storage device 1 will be elucidated with reference to flat objects 2,3, such as a parallelepiped shaped single or double casing for compact discs, video cassette casing and audio cassette casing comprising tray-shaped bottom part 4. This bottom part has upstanding wall portions 5,6 and 7,8. On these wall portions 5, 6 abutment means 9, 10 respectively are provided. These abutment means (see also fig. 3)
comprise a flat rectangular supporting plate 11 and a stud 12 protruding therefrom. The supporting plates can be introduced in one of the slots 13 provided in wall parts 5,6 and will be secured by the dovetail-shape of plate 11 and corresponding shape of slot 13. By selecting of slot 13 in which the supporting plates are introduced, the spacing of subsequent abutment means, such as 18 and 19, can be determined such that a casing having a predetermined thickness can be received (see Fig. 2). If the spacing is chosen somewhat larger than the thickness of the article to be received, it is possible to leave through the articles stored. When doing so upward forces are acting on studs 18,19, which is the reason that supporting plate 11 should be secured relatively tight in its corresponding slot 13. On the other hand it must be possible to easily remove the supporting plates 11 from slot 13 to change the spacing between two adjacent studs 18,19. By selectively introducing supporting plates 11 in slots 13 it is possible to vary the distance according to individual requirements. To further change the distance between two adjacent abutment means the stud-like protrusions 12 (see fig. 3) are non-symmetric in cross section and the supporting plate 11 is arranged such that it can be introduced in four positions into one of the slots 13 (fig.2). In this way it is possible to further vary the distance between two abutment means. Because of this the storage device according to the invention can be uniformly used for casings having different thickness.

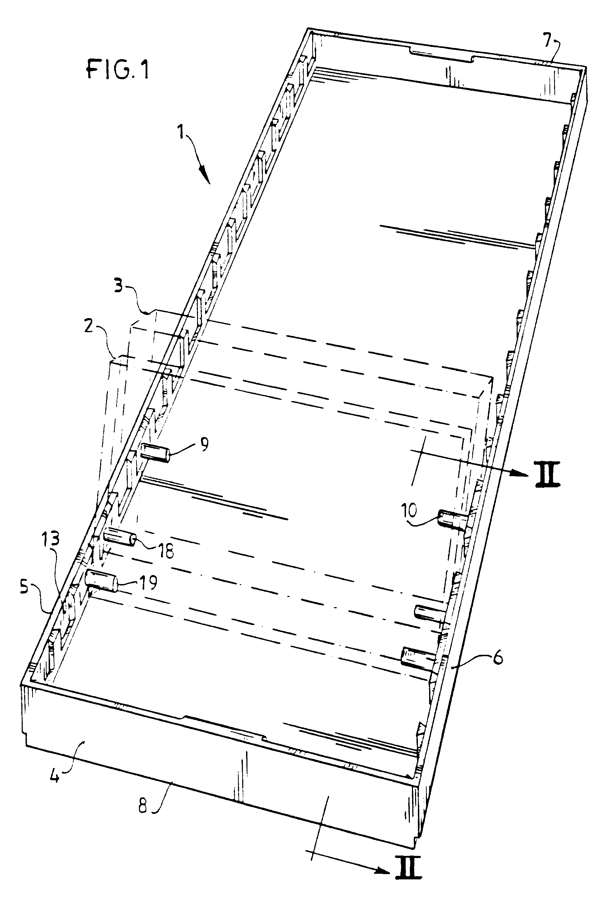

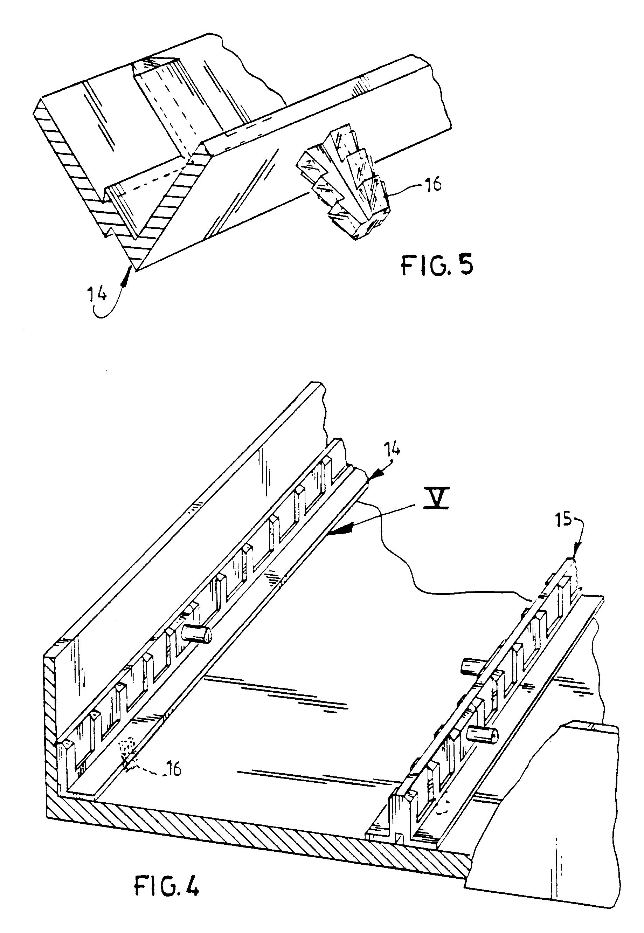

In the embodiment shown with reference to fig. 1 the upstanding wall portions 5,6 are integral with the bottom part of the tray-shaped device 4. However, according to a further embodiment of the invention it is possible to assembly such a tray-like storage device by providing wall portions 14,15 as shown in fig. 4 as strip-like members. In the embodiment shown in fig. 4 and 5 these strip portions are provided with a pin-like protrusion 16 which can be received in a corresponding opening in a bottom plate (fig.4). By having a bottom plate with a large number of receiving openings it is possible to vary the distance between two adjacent strip means and to adapt the assembly to vary the width of the articles to be stored. It is also possible to provide the base part of the upstanding portions 14,15 with so-called double adhering tape. After removing a cover sheet it is possible to adhere strips 14,15 to any kind of bottom plate in any position. From fig. 4 it is clear that strip means 14, 15 can be provided either at one side or at both sides with slots 13 to receive supporting plates 11.

As shown in fig. 6 it is also possible to realize the abutment means as a rod member being at both sides provided with supporting plates. By this the number of parts will considerably decrease and a fixed distance between two adjacent strip means is provided.

Although the embodiments described above are preferred at the time being it has to be understood that amendments can be made being within the range of the person skilled in the art and within the annexed claims.

## Claims

1. Storage device (1) for parallelepiped shaped articles (2,3), comprising a tray shaped base portion having an upstanding portion (5,6) being provided with means (13) to receive abutment means (9,10) for said articles, said abutment means comprising elongated members (12,17), characterized in that said abutment means (9,10) comprise a supporting plate (11) for said elongated member (12,17) and in that said receiving means (13) are adapted to receive movably said supporting plate.

2. Storage device according to claim 1, wherein said elongated member comprises a stud (12).

3. Storage device according to claim 1, wherein said elongated member comprises a rod (17) at both ends provided with the supporting plate.

4. Storage device according to one of the preceding claims, wherein said strip (15) is provided with receiving means (13) at both sides of said upstanding portion.

5. Storage device according to one of the preceding claims, wherein said elongated member (12) has a non-symetric cross section and said supporting plate being shaped such that it can be introduced in said receiving means in at least two positions.

6. Storage device according to one of the preceding claims wherein said base portion is provided with securing means.

7. Storage device according to one of the preceding claims comprising at least two strip means according to one of the preceding claims, wherein the base portions are incorporated in a bottom part (4).

## Patentansprüche

1. Aufbewahrungseinrichtung (1) für quaderförmige Gegenstände (2, 3), die einen tablettförmigen Basisabschnitt mit einem hochstehenden Abschnitt (5, 6) aufweist, der mit Aufnahmemitteln (13) für Wiederlagermittel (9, 10) für die Gegenstände versehen ist, wobei die Wiederlagermittel (9, 10) längliche Elemente (12, 17) aufweisen, dadurch gekennzeichnet, daß die Wiederlagermittel (9, 10) eine Trägerplatte (11) für die länglichen Elemente (12, 17) aufweisen und daß die Aufnahmemittel (13) so ausgebildet sind, um die Trägerplatte (11) lösbar aufzunehmen.

2. Aufbewahrungseinrichtung nach Anspruch 1, bei welcher das längliche Element einen Vorsprung (12) aufweist.

3. Aufbewahrungseinrichtung nach Anspruch 1, bei welcher das längliche Element als Stange (17) ausgebildet ist, die an beiden Enden mit einer Trägerplatte (11) versehen ist.

4. Aufbewahrungseinrichtung nach einem der vorhergehenden Ansprüche, bei welcher ein Streifen (15) mit auf beiden Seiten seines hochstehenden Abschnittes angeodneten Aufnahmemitteln (13) versehen ist.

5. Aufbewahrungseinrichtung nach einem der vorstehenden Ansprüche, bei welcher das längliche Element (12) einen asymmetrischen Querschnitt aufweist und die Trägerplatte (11) so ausgebildet ist, daß sie in wenigstens zwei Positionen in die Aufnahmemittel eingelegt werden kann.

6. Aufbewahrungseinrichtung nach einem der vorhergehenden Ansprüche, bei welcher der Basisabschnitt mit Sicherungsmitteln versehen ist.

7. Aufbewahrungseinrichtung nach einem der vorhergehenden Ansprüche, mit wenigstens zwei Streifen gemäß einem der vorherstehenden Ansprüche, bei welchen die Basisabschnitte in einem unteren Teil (4) eingearbeitet sind.

## Revendications

1. Dispositif de stockage (1) pour articles (2, 3) de forme parallélipipédique, comprenant une partie de base en forme de plateau présentant une partie verticale (5, 6) pourvue de moyens (13) destinés à recevoir des moyens de butée (9, 10) pour lesdits articles, lesdits moyens de butée comprenant des éléments allongés (12, 17), caractérisé en ce que lesdits moyens de butée (9, 10) comprennent une plaque de support (11) pour ledit élément allongé (12, 17) et en ce que lesdits moyens de réception (13) sont adaptés pour recevoir de manière mobile ladite plaque de support.

2. Dispositif de stockage suivant la revendication 1, dans lequel ledit élément allongé comprend un téton (12).

3. Dispositif de stockage suivant la revendication 1, dans lequel ledit élément allongé comprend une barre (17) pourvue, aux deux extrémités, de la plaque de support.

4. Dispositif de stockage suivant l'une des revendications précédentes, dans lequel ladite bande (15) est pourvue de moyens de réception (13) de part et d'autre de ladite partie verticale.

5. Dispositif de stockage suivant l'une des revendications précédentes, dans lequel ledit élément allongé (12) a une section non-symétrique et ladite plaque de support est de forme telle qu'elle peut être insérée dans lesdits moyens de réception dans au moins deux positions.

6. Dispositif de stockage suivant l'une des revendications précédentes, dans lequel ladite partie de base est pourvue de moyens de fixation.

7. Dispositif de stockage suivant l'une des revendications précédentes, comprenant au moins deux moyens de bande suivant l'une des revendications précédentes, dans lequel les parties de base sont incorporées dans une pièce de fond (4).
